(19) **Europäisches Patentamt**

**European Patent Office**

**Office européen des brevets**

(11) **EP 1 041 689 A1**

(12) **EUROPEAN PATENT APPLICATION**
published in accordance with Art. 158(3) EPC

(43) Date of publication:
04.10.2000 Bulletin 2000/40

(51) Int. Cl.⁷: **H01S 3/1055**, H01S 3/139

(21) Application number: 99970514.8

(22) Date of filing: 08.10.1999

(86) International application number:
**PCT/JP99/05576**

(87) International publication number:
**WO 00/22703 (20.04.2000 Gazette 2000/16)**

(84) Designated Contracting States:
AT BE CH CY DE DK ES FI FR GB GR IE IT LI LU MC NL PT SE

(30) Priority: 12.10.1998 JP 28952498

(71) Applicants:
• **Kabushiki Kaisya Ushiosougougizyutsukenkyusyo**
Tokyo 105-0014 (JP)
• **NEC Corporation**
Minato-ku, Tokyo 108-0014 (JP)

(72) Inventors:
• TADA, Akifumi,
Nec Corporation
Minato-ku, Tokyo 108-0014 (JP)
• SEKI, Kyohei
K. K. Ushiosougougizyutsukenkyusyo
Gotenba-shi, Sizuoka 412-0038 (JP)

(74) Representative:
VOSSIUS & PARTNER
Siebertstrasse 4
81675 München (DE)

(54) **EXCIMER LASER**

(57) The present invention relates to an arrangement of a bandwidth-narrowing optical system for use in an excimer laser apparatus using a bandwidth-narrowing optical system including a beam diameter-enlarging prism and a Littrow mounting reflection type diffraction grating, the bandwidth-narrowing optical system suffering a minimal variation in the oscillation center wavelength even when there is a change in temperature. In an excimer laser apparatus having a bandwidth-narrowing optical system (6) including a Littrow mounting reflection type diffraction grating (3) and a beam diameter-enlarging optical system (5) placed on the entrance side of the reflection type diffraction grating (3), the beam diameter-enlarging optical system (5) has at least one beam diameter-enlarging prism (11, 12) made of fluorite and at least one beam diameter-enlarging prism (13) made of synthetic quartz, and the rate of change of the oscillation center wavelength with a change in temperature is minimized by considering the number of beam diameter-enlarging prisms (11, 12) made of fluorite and the number of beam diameter-enlarging prisms (13) made of synthetic quartz, together with the direction of placement of these beam diameter-enlarging prisms.

FIG. 1

**EP 1 041 689 A1**

## Description

Technical Field

The present invention relates to an excimer laser apparatus and, more particularly, to an excimer laser apparatus having a bandwidth-narrowing optical system, which suffers a minimal variation in the oscillation center wavelength even when there is a change in temperature.

Background Art

Vacuum ultraviolet rays of wavelength around 193.3 nm generated from excimer laser apparatus, particularly ArF excimer laser apparatus, attract attention as being a next-generation laser light source for semiconductor exposure. As optical materials usable for exposure apparatus in the vacuum ultraviolet region, however, there are only synthetic quartz and fluorite, and it is extremely difficult to achromatize the optical system of the exposure apparatus. Accordingly, it is demanded that light generated from the excimer laser apparatus have an extremely narrow bandwidth (line width) of the order of 1 pm, and it is also demanded that the center wavelength thereof do not vary with a change in temperature.

Optical systems practically usable for narrowing the band of oscillation wavelengths in excimer laser apparatus include an etalon and a Littrow mounting reflection type diffraction grating. The former requires a high degree of surface accuracy and coating. In the present state of the art, only synthetic quartz can be used to obtain a high degree of accuracy. Synthetic quarts suffers from the problem that when the laser light intensity increases, synthetic quartz cannot be used because it suffers an increase in refractive index (compaction) and a reduction in transmittance. In addition, the line width widens undesirably when the coating becomes deteriorated. In contrast, in the case of the Littrow mounting reflection type diffraction grating, the line width is determined by the diameter of a beam incident on the reflection type diffraction grating. Therefore, the reflection type diffraction grating is used in combination with a beam diameter-enlarging optical system comprising a deviation prism of oblique incidence and normal emergence. In this case, even when the prism becomes deteriorated, the beam diameter magnifying power does not change, and even when the reflecting surface of the reflection type diffraction grating becomes deteriorated, the groove pitch does not change. Therefore, there is no influence on the line width.

In the case of using a bandwidth-narrowing optical system including a beam diameter-enlarging prism and a Littrow mounting reflection type diffraction grating as stated above, if there is a change in temperature, the oscillation center wavelength varies undesirably by reason of a change in refractive index of the prism. A variation in wavelength of the light source causes a change in projection magnification of the exposure apparatus owing to chromatic aberration undesirably. Therefore, such a system is inadequate to be used as a light source for semiconductor exposure of high accuracy.

Disclosure of Invention

The present invention was made in view of the above-described problems with the prior art, and an object of the present invention is to provide an arrangement of a bandwidth-narrowing optical system for use in an excimer laser apparatus using a bandwidth-narrowing optical system including a beam diameter-enlarging prism and a Littrow mounting reflection type diffraction grating, the bandwidth-narrowing optical system suffering a minimal variation in the oscillation center wavelength even when there is a change in temperature.

To attain the above-described object, the present invention provides an excimer laser apparatus having a bandwidth-narrowing optical system including a Littrow mounting reflection type diffraction grating and a beam diameter-enlarging optical system placed on the entrance side of the reflection type diffraction grating, wherein the beam diameter-enlarging optical system has at least one beam diameter-enlarging prism made of fluorite and at least one beam diameter-enlarging prism made of synthetic quartz, and the rate of change of the oscillation center wavelength with a change in temperature is minimized by considering the number of beam diameter-enlarging prisms made of fluorite and the number of beam diameter-enlarging prisms made of synthetic quartz, together with the direction of placement of these beam diameter-enlarging prisms.

In this case, it is desirable that the beam diameter-enlarging optical system include two beam diameter-enlarging prisms made of fluorite and one beam diameter-enlarging prism made of synthetic quartz, and all the three beam diameter-enlarging prisms be placed in the positive direction, and further the angle of incidence on the reflection type diffraction grating be in the positive direction.

In this case, it is desirable that the beam diameter-enlarging prism made of synthetic quartz be placed closest to the reflection type diffraction grating.

The present invention is also applicable in a case where ArF is used as a laser medium.

The present invention further includes a bandwidth-narrowing optical system for narrowing the band of incident ultraviolet light, which comprises a beam diameter-enlarging optical system having two beam diameter-enlarging prisms made of fluorite and one beam diameter-enlarging prism made of synthetic quartz, and a Littrow mounting reflection type diffraction grating.

In this case, it is desirable that the ultraviolet light be ultraviolet light generated from or amplified by an ArF excimer laser medium, and the beam diameter-enlarging prism made of synthetic quartz be placed closest to the reflection type diffraction grating.

In the present invention, a beam diameter-enlarging optical system placed on the entrance side of a Littrow mounting reflection type diffraction grating has at least one beam diameter-enlarging prism made of fluorite and at least one beam diameter-enlarging prism made of synthetic quartz. Therefore, when there is a change in temperature, changes in the angle of deviation in the prisms are allowed to cancel each other, thereby reducing the change with temperature of the angle of incidence on the reflection type diffraction grating. Thus, it is possible to minimize the change of the oscillation center wavelength with temperature.

Brief Description of Drawings

Fig. 1 is a diagram showing an optical arrangement of an excimer laser apparatus according to one embodiment of the present invention.

Fig. 2 is a diagram showing comparatively the oscillation spectral distribution when a bandwidth-narrowing optical system of an ArF excimer laser apparatus is not used and the oscillation spectral distribution when the bandwidth-narrowing optical system is used.

Fig. 3 is a diagram showing possible prism placement directions for a bandwidth-narrowing optical system using three prisms.

Best Mode for Carrying Out the Invention

The excimer laser apparatus according to the present invention will be described below on the basis of an embodiment.

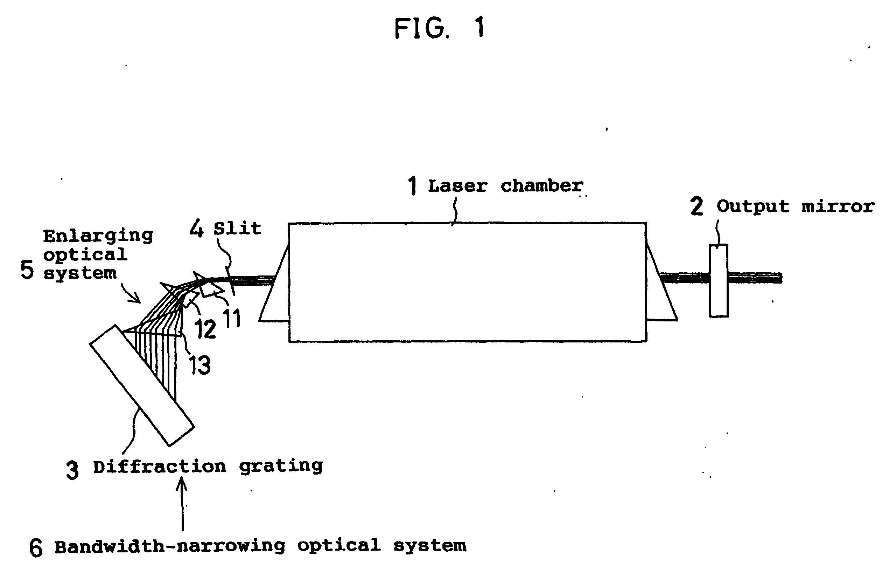

Fig. 1 shows an optical arrangement of an excimer laser apparatus using a bandwidth-narrowing optical system having beam diameter-enlarging prisms and a Littrow mounting reflection type diffraction grating. In the figure, a pumping system, a control system, etc. are not shown. In the case of an ArF excimer laser apparatus, argon gas and fluorine gas are sealed in a laser chamber 1 as a laser medium, together with a buffer gas. In addition, the laser chamber 1 contains main discharge electrodes for pumping, preionization electrodes, and a gas circulating system. The laser chamber 1 is placed in an optical resonator formed by an output mirror 2 and a Littrow mounting reflection type diffraction grating 3. Between the reflection type diffraction grating 3 and the laser chamber 1, a slit 4 and a beam diameter-enlarging optical system 5 comprising a plurality (3 in the figure) of prisms 11 to 13 are placed. The reflection type diffraction grating 3, the beam diameter-enlarging optical system 5 and the slit 4 constitute a bandwidth-narrowing optical system 6 used in the excimer laser apparatus according to the present invention.

The Littrow mounting reflection type diffraction grating 3 is arranged such that the reflection type diffraction grating 3 is tilted with respect to incident light, and the angle of oblique incidence is equal to the angle of predetermined order of diffraction. The prisms 11 to 13 are each placed so that incident light is obliquely incident on the entrance-side surface of the prism and emerges from the exit-side surface at right angles thereto. Each of the prisms 11 to 13 enlarges the diameter of the incident beam at a predetermined magnification. Consequently, in the beam diameter-enlarging optical system 5 comprising a plurality of prisms 11 to 13, the beam diameter is enlarged to a size corresponding to the product of the magnifications of the prisms 11 to 13.

The number of prisms 11 to 13 of the beam diameter-enlarging optical system 5 is determined by the required beam diameter magnifying power and transmittance. As the number of prisms 11 to 13 increases, the transmittance reduces, resulting in a reduction in the laser output. As the beam diameter magnifying power decreases, the bandwidth (line width) of laser light widens. In general, as the magnifying power is increased, the transmittance reduces. Therefore, the number of prisms 11 to 13 is determined by the line width and output required for the excimer laser apparatus. In a specific example described below, it is appropriate to determine the number of prisms 11 to 13 to be 3 from the required line width. However, the present invention is also applicable in a case where the number of prisms 11 to 13 is two or four or more.

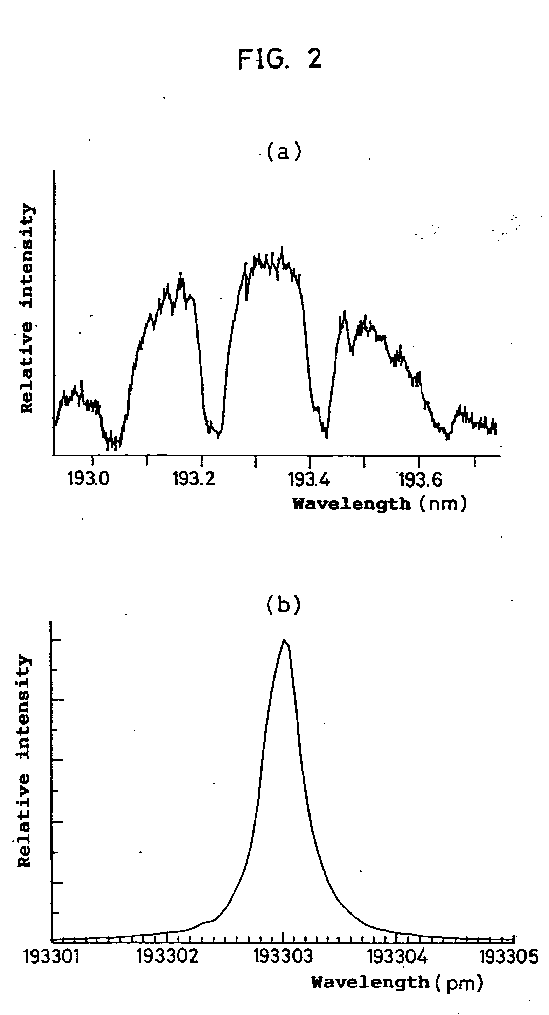

When the bandwidth-narrowing optical system 6 is not used, the ArF excimer laser apparatus arranged as stated above generates laser light having a wide spectral bandwidth, as shown in Fig. 2 (a), in which the half bandwidth is of the order of from 0.4 to 0.5 nm (absorption lines obtained by using oxygen). When the bandwidth-narrowing optical system 6 comprising three prisms 11 to 13 as in the specific example (described later) is used, narrow-band laser light exhibiting a spectrum with a line width narrowed down to the order of 1 pm is generated as shown in Fig. 2(b).

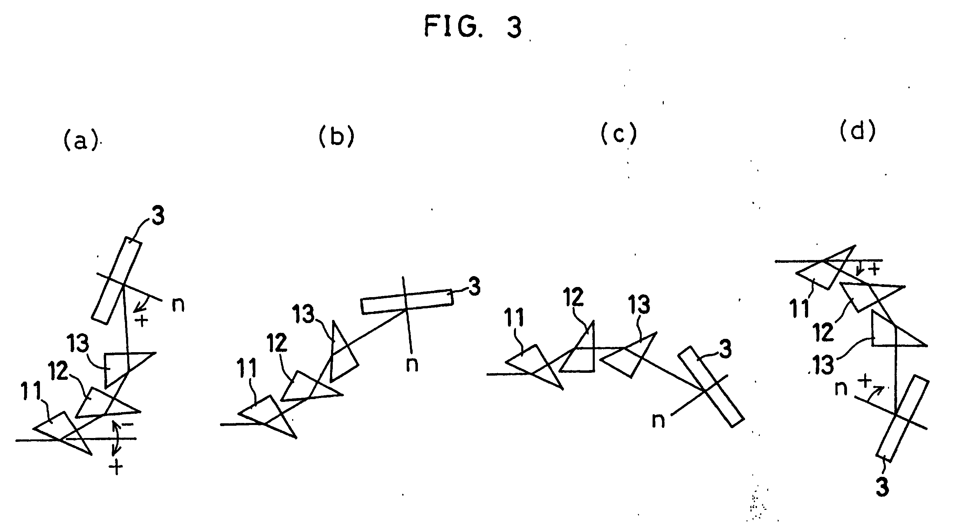

In the present invention, the relationship between the temperature variation and the oscillation center wavelength variation was examined in regard to various prism arrangements in the bandwidth-narrowing optical system 6 including the reflection type diffraction grating 3 and the beam diameter-enlarging optical system 5 as shown in Fig. 1. Prior to the description of a specific example thereof, let us explain the definition of the positive and negative regarding the direction of placement of the prisms 11 to 13 and the definition of the positive and negative regarding the direction of placement of the reflection type diffraction grating 3. As shown in Fig. 3, which is a sectional view of the bandwidth-narrowing optical system 6 containing the principal ray, the direction of travel of rays is taken in the direction from the prisms 11 to 13 toward the reflection type diffraction grating 3. If the direction of the principal ray exiting from one of the prisms 11 to 13 is right-handed (clockwise) with respect to the direction of the principal ray entering the prism, the direction of placement of this prism is defined as a positive direction. If the direction of the principal ray exiting from one of the prisms 11 to 13 is left-handed (counterclockwise) with respect to the direction of the principal ray entering the prism, the direction of placement of this prism is defined as a negative direction. Accordingly, in the case of Fig. 3(a), all the three prisms 11 to 13 are placed in the negative direction. In the case of Fig. 3(b), the first prism 11 and the second prism 12 are placed in the negative direction, whereas the third prism 13 is placed in the positive direction. In the case of Fig. 3(c), the first prism 11 is placed in the negative direction, whereas the second prism 12 and the third prism 13 are placed in the positive direction. In the case of Fig. 3(d), all the three prisms 11 to 13 are placed in the positive direction. Regarding the reflection type diffraction grating 3, if the direction of the incident principal ray is right-handed (clockwise) with respect to the line n normal to the reflection type diffraction grating 3, the direction of placement of the reflection type diffraction grating 3 is defined as a positive direction. If the direction of the incident principal ray is left-handed (counterclockwise) with respect to the normal line n, the direction of placement of the reflection type diffraction grating 3 is defined as a negative direction. In all the cases shown in Figs. 3(a) to (d), the reflection type diffraction grating 3 is placed in the positive direction.

Assuming that the bandwidth-narrowing optical system 6 uses three prisms 11 to 13 as shown in Fig. 1 and that 0 to 3 of the prisms 11 to 13 are made of synthetic quartz and the remaining 3 to 0 of the prisms 11 to 13 are made of fluorite, let us examine the change of the oscillation center wavelength with a change in temperature when the prisms 11 to 13 are placed in the positive or negative direction. It is assumed that in all cases the reflection type diffraction grating 3 is placed in the positive direction (an arrangement in which the reflection type diffraction grating 3 is placed in the negative direction is equivalent to an arrangement in which the reflection type diffraction grating 3 is placed in the positive direction if the signs of the directions of placement of all the prisms 11 to 13 are inverted.)

First, the specifications of the prisms 11 to 13 are as shown in Table 1 (shown later).

The specifications of the reflection type diffraction grating 3 are as shown in Table 2 (shown later).

It should be noted that the specifications of the prisms 11 to 13 were determined from the following viewpoint. That is, in order to narrow the spectral width to 1 pm or less in the ArF excimer laser apparatus by using the reflection type diffraction grating 3, the magnifying power in the beam diameter-enlarging optical system 5 needs to be of the order of 15 times. When the beam diameter-enlarging optical system 5 is formed from three prisms 11 to 13, it is necessary to obtain a beam diameter magnifying power of about 2.5 times per prism. In the prisms 11 to 13 arranged to enlarge the beam diameter by making the laser beam obliquely incident thereon and emerge therefrom perpendicularly, the following relationships hold:

$$\sin\phi_1 = n\sin\alpha$$

$$M = \cos\alpha/\cos\phi_1$$

where $\phi_1$ is the incident angle; $\alpha$ is the prism apex angle; and M is the beam diameter magnifying power.

Therefore, if M is determined according to the above, the apex angle $\alpha$ is determined.

Regarding the structure using the prisms 11 to 13 and reflection type diffraction grating 3 having the above-described specifications, the change of the oscillation center wavelength with a change in temperature, i.e. $d\lambda/dt$, was obtained for each of 20 possible arrangements of the prisms 11 to 13. The results are shown in Table 3 (shown later), in which I is the number of prisms placed in the positive direction, and J is the number of prisms placed in the negative direction. It should be noted that $d\lambda/dt$ can be obtained from the following equation (1):

$$d\lambda/dt = \{\tan\alpha_1(dn_1/dt)(I_1-J_1) + \tan\alpha_2 \times (dn_2/dt)(I_2-J_2) + \tan\theta_1(dn_{air}/dt)\}$$
$$\div\{(\tan\theta_1/\lambda) - \tan\alpha_1(dn_1/d\lambda)(I_1-J_1) - \tan\alpha_2(dn_2/d\lambda)(I_2-J_2)\} \tag{1}$$

In the above equation, the subscripts 1 and 2 put to $\alpha$, $n_1$, I and J are values relating to fluorite and synthetic

quartz. In addition, $dn_{air}/dt$ is the change in refractive index of air with a change in temperature, which is given by

$$dn_{air}/dt = -1.074 \times 10^{-6} (K^{-1})$$

The results of the examination have revealed that in the bandwidth-narrowing optical system 6 using three prisms 11 to 13, the change of the oscillation center wavelength with a change in temperature, i.e. $d\lambda/dt$, is the smallest, i.e. +0.204 (pm/K), when two prisms made of fluorite and one prism made of synthetic quartz are used, in which all the three prisms are placed in the positive direction, and the reflection type diffraction grating 3 is also placed in the positive direction, that is, the prisms 11 to 13 and the reflection type diffraction grating 3 are placed as shown in Fig. 3(d) or placed as shown in Fig. 1 (in this case, although the prisms 11 to 13 are placed in the negative direction, because the reflection type diffraction grating 3 is also placed in the negative direction, the arrangement is equivalent to the arrangement shown in Fig. 3(d)).

This can be explained from another aspect. That is, it is possible to say that, as shown in Table 1, the temperature coefficient of refractive index $dn/dt$ of fluorite is negative, whereas $dn/dt$ of synthetic quartz is positive; therefore, by combining together a prism made of fluorite and a prism made of synthetic quartz, changes in the angle of deviation in the prisms caused by a change in temperature are allowed to cancel each other, thereby reducing the change with temperature of the angle of incidence on the reflection type diffraction grating 3 and thus minimizing the change of the oscillation center wavelength with temperature. This is not only true of a case where the number of prisms is three as in the above-described specific example, but also for a case where the number of prisms is two or a case where the number of prisms is four or more (equation (1) is also applicable in these cases).

In the above discussion, where to place one prism made of synthetic quartz with respect to two prisms made of fluorite is not questioned. Therefore, in the arrangement shown in Fig. 1, any of the prisms 11 to 13 may be a prism made of synthetic quartz. However, when the laser light intensity increases, synthetic quartz suffers an increase in refractive index (compaction) and a reduction in transmittance, as has been stated in the section regarding the prior art. Therefore, it is desirable that synthetic quartz be placed at a position where the laser light intensity is relatively weak. In the beam diameter-enlarging optical system 5, the beam diameter becomes larger as the distance from the first prism 11 increases toward the reflection type diffraction grating 3. Accordingly, the laser light intensity becomes weaker as the distance from the first prism 11 increases toward the reflection type diffraction grating 3. Therefore, it is most desirable that the third prism 13, which is the closest to the reflection type diffraction grating 3, be a prism made of synthetic quartz, and the first prism 11 and the second prism 12 be prisms made of fluorite.

The use of synthetic quartz as a beam diameter-enlarging prism allows the prism polishing accuracy to be increased and permits the cost to be reduced, advantageously.

Although the excimer laser apparatus according to the present invention, which uses a bandwidth-narrowing optical system including a beam diameter-enlarging prism and a Littrow mounting reflection type diffraction grating, has been described above on the basis of the embodiment and the specific example, the present invention is not limited to the embodiment and so forth but can be modified in a variety of ways. For example, the present invention is also applicable in a case where the number of prisms is two or in a case where the number of prisms is four or more. In addition, the bandwidth-narrowing optical system based on the present invention can be used singly.

Industrial Applicability

As will be clear from the foregoing description, in the excimer laser apparatus according to the present invention, a beam diameter-enlarging optical system placed on the entrance side of a Littrow mounting reflection type diffraction grating has at least one beam diameter-enlarging prism made of fluorite and at least one beam diameter-enlarging prism made of synthetic quartz. Therefore, when there is a change in temperature, changes in the angle of deviation in the prisms are allowed to cancel each other, thereby reducing the change with temperature of the angle of incidence on the reflection type diffraction grating. Thus, it is possible to minimize the change of the oscillation center wavelength with temperature.

Table 1

| Vitreous material | Fluorite ($CaF_2$) | Synthetic quartz ($SiO_2$) |
|---|---|---|
| Beam diameter magnifying power per prism | 2.50 | 2.50 |
| Prism apex angle $\alpha(°)$ | 39.3 | 37.4 |
| Incident angle $\phi_1(°)$ | 72.0 | 71.5 |

Table 1 (continued)

| Vitreous material | Fluorite (CaF$_2$) | Synthetic quartz (SiO$_2$) |
|---|---|---|
| Refractive index n | 1.50 | 1.56 |
| dn/dλ (m$^{-1}$) | -0.98×10$^6$ | -1.2×10$^6$ |
| dn/dt (K$^{-1}$) | -5.9×10$^{-6}$ | +16×10$^{-6}$ |
| Note) n, dn/dλ (m$^{-1}$) and dn/dt (K$^{-1}$) are values at wavelength of 193.3 nm | | |

Table 2

| Littrow angle (incident angle) θ$_1$ (°) | 44 |
|---|---|
| Number of grooves (grooves/mm) | 3600 |
| Order of diffraction | 2 |
| Note) Littrow angle is an angle measured from normal n | |

Table 3

| Fluorite (CaF$_2$) | | Synthetic quartz (SiO$_2$) | | dλ/dt (pm/K) |
|---|---|---|---|---|
| I (positive) | J (negative) | I (positive) | J (negative) | |
| 3 | 0 | 0 | 0 | -2.095 |
| 2 | 1 | 0 | 0 | -1.010 |
| 2 | 0 | 1 | 0 | +0.204 |
| 2 | 0 | 0 | 1 | -4.029 |
| 1 | 2 | 0 | 0 | +0.903 |
| 1 | 1 | 1 | 0 | +1.891 |
| 1 | 1 | 0 | 1 | -3.248 |
| 1 | 0 | 2 | 0 | +2.434 |
| 1 | 0 | 1 | 1 | -1.010 |
| 1 | 0 | 0 | 2 | -7.639 |
| 0 | 3 | 0 | 0 | +5.179 |
| 0 | 2 | 1 | 0 | +4.831 |
| 0 | 2 | 0 | 1 | -1.455 |
| 0 | 1 | 2 | 0 | +4.681 |
| 0 | 1 | 1 | 1 | +0.903 |
| 0 | 1 | 0 | 2 | -8.736 |
| 0 | 0 | 3 | 0 | +4.598 |
| 0 | 0 | 2 | 1 | +1.891 |
| 0 | 0 | 1 | 2 | -3.248 |
| 0 | 0 | 0 | 3 | -16.763 |

**Claims**

1. An excimer laser apparatus having a bandwidth-narrowing optical system including a Littrow mounting reflection type diffraction grating and a beam diameter-enlarging optical system placed on an entrance side of the reflection type diffraction grating,
   wherein said beam diameter-enlarging optical system has at least one beam diameter-enlarging prism made of fluorite and at least one beam diameter-enlarging prism made of synthetic quartz, and
   wherein a rate of change of an oscillation center wavelength with a change in temperature is minimized by considering the number of beam diameter-enlarging prisms made of fluorite and the number of beam diameter-enlarging prisms made of synthetic quartz, together with a direction of placement of these beam diameter-enlarging prisms.

2. An excimer laser apparatus according to claim 1, wherein said beam diameter-enlarging optical system includes two beam diameter-enlarging prisms made of fluorite and one beam diameter-enlarging prism made of synthetic quartz, all the three beam diameter-enlarging prisms being placed in a positive direction, and an angle of incidence on said reflection type diffraction grating is in the positive direction.

3. An excimer laser apparatus according to claim 2, wherein said beam diameter-enlarging prism made of synthetic quartz is placed closest to said reflection type diffraction grating.

4. An excimer laser apparatus according to any one of claims 1 to 3, wherein a laser medium is ArF.

## FIG. 1

**1** Laser chamber

**2** Output mirror

Enlarging optical system **5**

**4** Slit

**11**

**12**

**13**

**3** Diffraction grating

**6** Bandwidth-narrowing optical system

## FIG. 2

(a)

(b)

FIG. 3

# INTERNATIONAL SEARCH REPORT

| International application No. |
| --- |
| PCT/JP99/05576 |

**A. CLASSIFICATION OF SUBJECT MATTER**
    Int.Cl⁷   H01S3/1055, H01S3/139

According to International Patent Classification (IPC) or to both national classification and IPC

**B. FIELDS SEARCHED**

Minimum documentation searched (classification system followed by classification symbols)
    Int.Cl⁷   H01S3/105-3/1055, H01S3/136-3/139

Documentation searched other than minimum documentation to the extent that such documents are included in the fields searched

| | | | |
| --- | --- | --- | --- |
| Jitsuyo Shinan Koho | 1940-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | US, 5761236, A (Lambda Physik Gesellschaft zur Herstellung Von Lasern mbH), 02 June, 1998 (02.06.98), Full text; Figs. 1 to 6 & JP, 9-321370, A Full text; Figs. 1 to 6 & DE, 19603637, C1 | 1-4 |
| Y | JP, 5-291674, A (Mitsubishi Electric Corporation), 05 November, 1993 (05.11.93), Fig. 8   (Family: none) | 1-4 |
| Y | WO, 98/32200, A (Cymer, Inc), 23 July, 1998 (23.07.98), Full text; Figs. 1-3B & JP, 10-209548, A Full text; Figs. 1-3B & US, 5898725, A    & EP, 954890, A1 | 1-4 |

| ☐ Further documents are listed in the continuation of Box C. | ☐ See patent family annex. |
| --- | --- |

| | |
| --- | --- |
| *     Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    28 December, 1999 (28.12.99) | Date of mailing of the international search report<br>    11 January, 2000 (11.01.00) |
| --- | --- |
| Name and mailing address of the ISA/<br>    Japanese Patent Office | Authorized officer |
| Facsimile No. | Telephone No. |

Form PCT/ISA/210 (second sheet) (July 1992)